# EUROPEAN PATENT APPLICATION

(11) **EP 4 516 964 A1**
(43) Date of publication of application: **05.03.2025**
(21) Application number: 23382892.0
(22) Date of filing: 01.09.2023
(51) Int. Cl.: C25B 1/04, C25B 9/65, C25B 9/75, C25B 9/77, C25B 11/032, C25B 11/052, C25B 11/061, C25B 11/089

(54) **STACK-TYPE ELECTROLYZER FOR OBTAINING HYDROGEN AND OXYGEN FROM THE ELECTROCATALYTIC BREAKDOWN OF A WATER-BASED ELECTROLYTE**

(71) Applicant: Magnetocat, S.L., 03012 Alicante (ES)
(72) Inventor: Gracia Budria, José Manuel, 03012 Alicante (ES)
(74) Representative: Isern Patentes y Marcas S.L.

(57) **Abstract**

The invention relates to a stack-type electrolyzer for obtaining hydrogen and oxygen, provided with lateral closure caps (2) and cells (3), each cell (3) comprising: a current collector anode plate (5a) and cathode plate (5b); one porous transport layer (7,8) comprising a conductive porous material that is a hard magnet, a semi-hard magnet or a soft magnet, a first catalysts for the anode plate (5a) and a second catalysts for the cathode (5b) plate; and a first arrangement of magnets (6), that are hard or semi-hard, attached to the current collector anode plate (5a), and/or to the current collector cathode plate (5b).

## Description

### TECHNICAL FIELD

The present invention belongs to the technical field of hydrogen and oxygen generation.

More particularly, the invention refers to a stack-type electrolyzer arranged for obtaining hydrogen and oxygen from the electrocatalytic breakdown of a water-based electrolyte.

As it will be explained in more detail below, the electrolyzer according to the present invention is able to achieve a high hydrogen and oxygen of production rate with low degradation (long term efficiency at high current densities), it is easy to assemble and can work at high temperatures and pressures.

### STATE OF THE ART

In the last years there has been a growing interest in the production of hydrogen, since this element is considered as a possible substitute for fossil fuels. Therefore, hydrogen is going to play an important role in reducing carbon dioxide emissions soon.

As a result of this increasing interest, new hydrogen production methods and apparatuses have been developed. Thus, the so called electrolyzers, are devices arranged for obtaining hydrogen and oxygen from the electro-catalytic breakdown of a water-based electrolyte.

Nevertheless, the water electrolyzer development field is relatively new, so there is room for improvement, particularly for designing new electrolyzers with increased hydrogen production rates and stability (long term efficiency at high current densities), as well as reduced manufacturing and maintenance costs.

### BRIEF EXPLANATION OF THE INVENTION

In order to address the problems and disadvantages mentioned above, the present invention refers to a stack-type electrolyzer for obtaining hydrogen and oxygen from the electro-catalytic breakdown of a water-based electrolyte, according to the independent claim, which is provided with two lateral closure caps and one or more cells, characterized in that each cell comprises:
- at least one current collector anode plate;
- at least one current collector cathode plate;
- at least one porous transport layer, comprising at least one electric conductive porous material (for example, a metallic mesh or foam) that is a hard magnet or a semi-hard magnet or a soft magnet, the porous transport layer being disposed between the current collector anode plate and the current collector cathode plate and being arranged such that allows the water-based electrolyte to pass through the cell and allows hydrogen and oxygen flow outside the cell;
- at least a first arrangement of magnets, attached to the current collector anode plate, and/or to the current collector cathode plate; and
   at least a first catalyst for the current collector anode plate and a second catalyst for the current collector cathode plate, both the first catalyst and the second catalyst having positive magnetic susceptibility.

The term "hard magnet", also known as a permanent magnet, refers to a material with strong magnetic properties that can retain a significant portion of its magnetization even after the external magnetic field is removed, examples of hard magnets include materials like neodymium-iron-boron (NdFeB) and samarium-cobalt (SmCo) magnets.

The term "soft magnet", also known as a temporary magnet, refers to a material with low coercivity and high permeability. Soft magnets can be easily magnetized and demagnetized, meaning they quickly respond to changes in external magnetic fields. While they are not good at retaining magnetization over time, they are essential in applications where the ability to redirect and focus magnetic fields is crucial.

The term "semi-hard magnet" refers to a material that possesses characteristics intermediate between those of soft and hard magnets. It has moderate coercivity and can retain its magnetization to some extent after the external magnetic field is removed. However, it is not as resistant to demagnetization as hard magnets.

The presence of the first arrangement (or arrangements) of magnets acting in combination with the porous transport layer, which also comprises one or more hard and/or semi-hard and/or soft magnets, enhance the electrocatalytic reactions occurring in the electrolyzer cells, since each one of said elements contributes to generate a static magnetic field which improves the efficiency and stability to the electrocatalysts from where the hydrogen and oxygen are generated. Consequently, the stack-type electrolyzer according to the present invention can achieve a higher hydrogen and oxygen of production rate and stability, than other electrolyzers which form part of the state of the art.

Fungible elements in the stack type electrolyzer of the present invention such as the porous transport layer(s) have a long service life, a feature which further reduces maintenance needs. On the other hand, the present electrolyzers can work at high temperatures (in the range of 40 - 140 °C) and pressures (in the range of 1 - 100 bar), as well as in any PH range (0 to14).

The magnets which make up of the first arrangement can be hard magnets, semi-hard magnets, soft magnets, or a combination thereof.

According to the present invention, the permanent magnets, semi-hard magnets, soft magnets, or combinations thereof, which make up the first arrangement, can be attached to one of the faces of the current collector anode plate and/or the current collector cathode plate, or more preferably, to both faces thereof. In addition, the magnets of the first arrangement can be applied in form of powder (of any size) to, or be an integral part of, the current collector anode plate and/or the current collector cathode plate. Similarly, the electric conductive porous material of the porous transport layer(s) can be applied in form of powder of any size, or be an integral part of said porous transport layer(s).

Moreover, the magnets of the first arrangement(s) are electrically conductive and made of a composition that is stable in the working environment.

Thus, more preferably, the first arrangement of magnets comprises at least one hard or semi-hard magnet, such as a coated neodymium (NdFeB) magnet, a samarium cobalt (SmCos or Sm₂CO₁₇) magnet, a FeCrCo magnet, a FeCoVCr magnet,an AlNiCo magnet, or a magnet comprising Re-Co (rare earth cobalt), PtCo, MnAIC, CuNiFe, hard or soft ferrites, Cr- Co steels, Carbon steels, FeNiAlTi, CoFeNi, FeCoCr, FeCoV, FeMnNiTi, Fe and FeSi(3wt%), FeCo, FeNi or FeSiAl

The present invention also contemplates one possible embodiment in which the magnets which make up of the first arrangement of magnets, are also provided in at least one porous transport layer.

On the other hand, at least one current collector anode plate, one current collector cathode plate and/or one porous transport layer preferably comprises one or more sealing joints made of a polymer material that adapts to the irregularities of each surface they are in contact with.

The lateral closure caps are preferably made of a material which comprises a magnetic or highly magnetizable alloy that is stable in the working environment.

In addition, it is specially preferred that the current collector anode plates, the current collector cathode plates, and the porous transport layers of all cells, as well as both lateral closure caps, all comprise corresponding aligned holes for their secure fastening using threaded fasteners (such as bolts, nuts, and double washers).

Finally, the stack-type electrolyzer according to the present invention preferably comprises support means attachable to at least one of the two lateral closure caps to maintain the electrolyzer in a vertical orientation on a supporting surface.

Said support means can be, for example, two feet that can be screwed onto respective edges of at least one of the two lateral closure caps.

According to a first embodiment of the invention, at least one cell is provided with a diaphragm, a proton exchange membrane (PEM), or an anion exchange membrane (AEM).

Preferably, at least one of the first and second catalysts is directly coated on the diaphragm, on the proton exchange membrane, on the anion exchange membrane, on at least one porous transport layer, and/or coated on an independent electrically conductive and porous layer, said independent layer being disposed between the porous transport layer and the diaphragm, the proton exchange membrane, or the anion exchange membrane.

Most preferably, at least one of the first and the second catalysts are magnetically hard or semi-hard or soft or magnetizable with a magnetic susceptibility greater than 1. According to a second embodiment of the invention, which is compatible with the first embodiment, the magnets of the first arrangement, which are attached to the current collector anode plate and/or to the current collector cathode plate, are disposed creating a path for fluid flow.

Adopting this particular spatial distribution, is advantageous, since said path for fluid flow contributes to improve the guidance of the hydrogen and oxygen flows outside the cell.

In a third embodiment of the invention, which is compatible with the first embodiment and with the second embodiment, the stack-type electrolyzer also comprises a second arrangement of magnets which are disposed externally to the lateral closure caps. In this particular case, the first arrangement of magnets preferably consists of semi-hard and/or soft magnets.

The magnets which make up said second arrangement can be hard magnets, or semi-hard magnets, or a combination thereof.

More preferably, the second arrangement of magnets comprises at least one hard or semi-hard magnet, such as a coated neodymium (NdFeB) magnet, a samarium cobalt (SmCos or Sm₂CO₁₇) magnet, a FeCrCo magnet, a FeCoVCr magnet, or an AINiCo magnet, or a magnet comprising Re-Co (rare earth cobalt), PtCo, MnAIC, CuNiFe, hard or soft ferrites, Cr-Co steels, Carbon steels, FeNiAlTi, CoFeNi, FeCoCr, FeCoV, FeMnNiTi, Fe and FeSi(3wt%), FeCo, FeNi or FeSiAl.

In a fourth embodiment of the invention, which is compatible with all the previously embodiment described above (embodiments one to three), the material of at least one current collector anode plate, one current collector cathode plate and/or one porous transport layer comprises soft and/or semi-hard magnet(s) with a core made of Ni, Fe, Co, Cr, Sm, or alloys thereof, such as AlNiCo, Nd₂FeB₂, SmCo₅ or Sm₂Co₁₇, FeCrCo, or FeSi(3wt%), FeCo(35wt%) or FeNi(78wt% or 50wt%). This core can be additionally plated with another electrically conductive material.

### DESCRIPTION OF THE DRAWINGS

For a better understanding of the invention, the following figures are included, showing a particular embodiment thereof, wherein:
Figure 1A is a front perspective view of an alkaline stack-type electrolyzer with diaphragm according to a first exemplary embodiment of the present invention;
Figure 1B is a side perspective view of the stack-type electrolyzer shown in Figure 1A;
Figure 2 an exploded perspective view of the stack-type electrolyzer shown in Figure 1A;
Figure 3 shows a detail of Figure 2, at enlarged scale, illustrating the elements that make part of the cell in this particular embodiment of the stack-type electrolyzer; and
Figure 4, is a view similar to Figure 3, illustrating the trajectory followed by hydrogen, oxygen and electrolyte when the electrolyzer is in operation.

### EXPLANATION OF NUMERICAL REFERENCES

- 1: Electrolyte inlet;
- 2: Lateral closure cap;
- 3: Cell;
- 4: Through hole;
- 5a: Current collector anode plate;
- 5b: Current collector cathode plate;
- 6: Magnets (of the first arrangement);
- 7,8: Porous transport layers;
- 9: Outlet orifice;
- 10: Hydrogen outlet;
- 11: Oxygen outlet;
- 12: Diaphragm;
- 13: Electrolyte outlet;
- 14,15, 16: Sealing joints;
- 17: Threaded fasteners.

### EMBODIMENTS OF THE INVENTION

An embodiment of the invention is briefly described below, as an illustrative and nonlimiting example thereof.

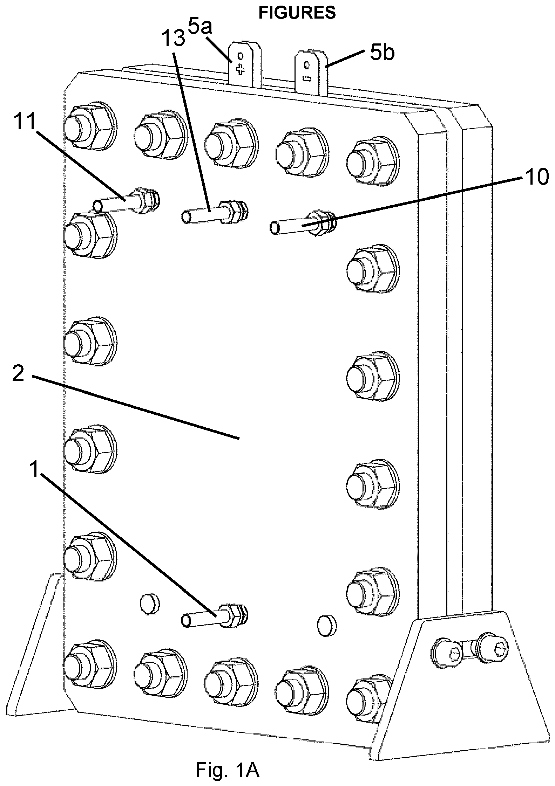

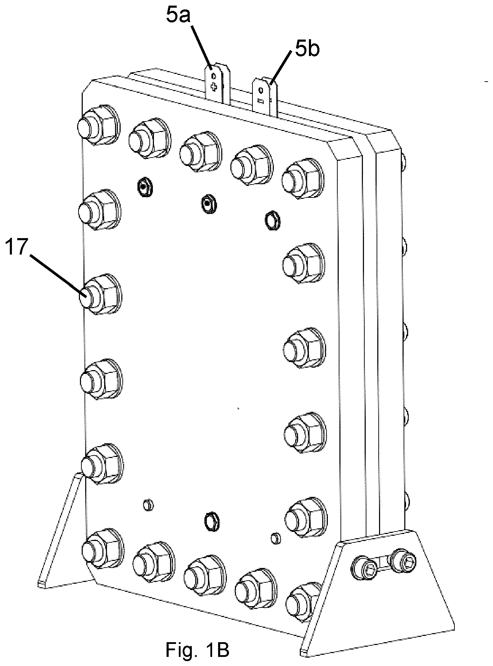

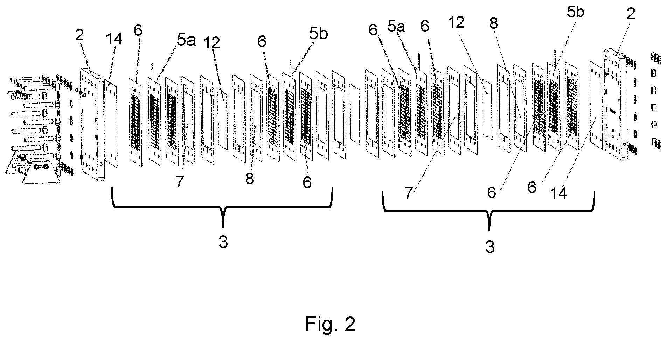

The example shown in figures 1A, 1B, 2, 3 and 4 corresponds to a first preferred embodiment of stack-type electrolyzer, that is, an electrolyzer having flat lateral walls and whose thickness is smaller than the dimension of said walls.

In this embodiment, the electrolyzer comprises two identical cells 3, disposed in series between two lateral closure caps 2.

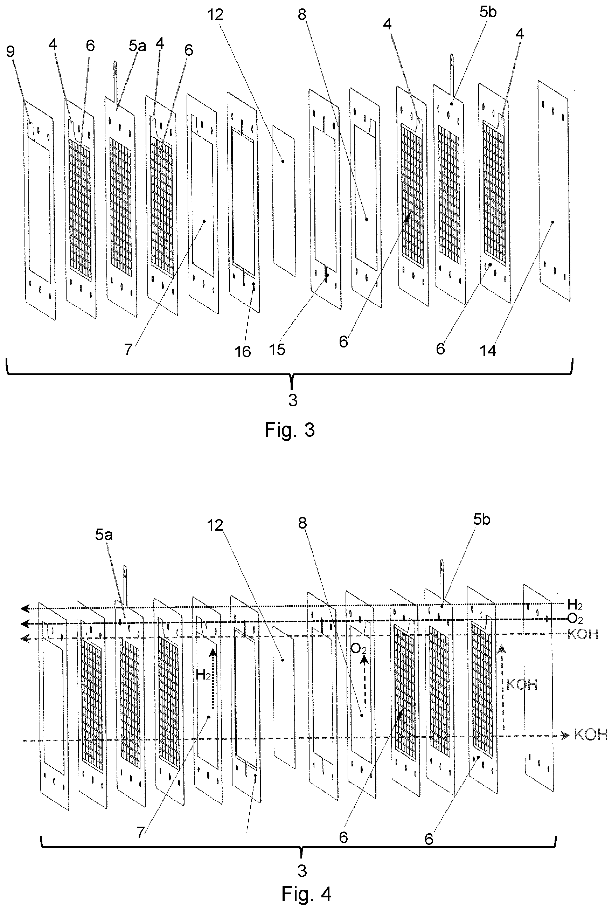

The electrolyte is introduced in the electrolyzer through an electrolyte inlet 1 lateral closure caps 2. In this particular case, the electrolyte is a solution of potassium hydroxide, so the diaphragm 12 provided in the cells (which is visible in Fig. 3) allows the ions of the electrolyte to pass. In this particular embodiment of the invention, diaphragm 12 is disposed between sealing joints 15 and 16. An additional sealing joint 14 is disposed in contact with closure caps 2.

Nevertheless, the present invention also contemplates the use of a proton exchange membrane (PEM) or anion exchange membrane (AEM). For PEM, the electrolyte will be distilled water.

The electrolyte flows inside each cell 3 passing through holes 4 provided in plates containing the first arrangement of magnets 6, and which are attached to both sides of the current collector anode plate 5a and which are also attached to both sides of current collector cathode plate 5b.

In the case of a PEM or AEM membrane the electrolyte could flow inside the cells exclusively through a hole practiced in the current collector anode plate 5a.

On the other hand, a potential difference is established between the current collector anode plate 5a and the current collector cathode plate 5b of each cell.

Magnets 6 attached to both sides of the current collector anode plate 5a and to both sides of current collector cathode plate 5b and in this particular case, also to the corresponding porous transport layers 7 and 8, generate a static magnetic field which enhances the electrocatalytic reactions occurring in each of the electrolyzer cells 3. The first and second catalysts are deposited directly on the porous transport layers.

Two porous transport layers 7 and 8 PTLs made of a soft magnet and/or highly magnetizable conductive alloy/composition are disposed in each cell 3 between the first array of permanent magnets and the diaphragm. Said porous transport layers 7, 8 with the first and second catalysts on top break the electrolyte molecules, expelling bubbles made up of hydrogen and oxygen molecules. Therefore, layers 7 and 8 act as a transport medium for electrons and oxygen and hydrogen bubbles.

The hydrogen and oxygen molecules will be directed towards an outlet hole 9 (as shown in Fig. 4) and will be extracted individually, through a hydrogen outlet 10 and oxygen outlet 11, respectively, which are provided in one of the lateral closure caps 2, until safe storage.

The lateral closure caps 2 are made of a soft magnet and/or highly magnetizable conductive alloy/composition that is stable in the working environment.

The diaphragm 12, that could be also a PEM or AEM membrane, separates the region of the anode plate 5a from the cathode plate 5b. In addition, the outlet hole 13 for the rest of the process electrolyte is located in the same lateral closing cover.

To allow high pressure and temperature operation safely, each current collector anode plate 5a, current collector cathode plate 5b and each porous transport layer 7, 8 comprises sealing joints (respectively), which are made of flexible material so that they adapt perfectly to surface imperfections. This material is also non-conductive and stable in the environment. The complete system, together with the side plates, is screwed by means of threaded fasteners 17, in this case, an insulating bolt-nut-double washer system.

## Claims

1. A stack-type electrolyzer for obtaining hydrogen and oxygen from the electrocatalytic breakdown of a water-based electrolyte, provided with two lateral closure caps (2) and one or more cells (3), **characterized in that** each cell (3) comprises:
- at least one current collector anode plate (5a);
- at least one current collector cathode plate (5b);
- at least one porous transport layer (7,8), comprising at least one electric conductive porous material that is a hard magnet, or a semi-hard magnet or a soft magnet, the porous transport layer (7,8) being disposed between the current collector anode plate (5a) and the current collector cathode plate (5b) and being arranged such that allows the electrolyte pass through the cell (3) and allows hydrogen and oxygen flow outside the cell (3);
- at least a first arrangement of magnets (6), attached to the current collector anode plate (5a), and/or to the current collector cathode plate (5b); and
- at least a first catalyst for the current collector anode plate (5a) and a second catalyst for the current collector cathode plate (5b), both the first catalyst and the second catalyst having positive magnetic susceptibility.

2. The stack-type electrolyzer according to claim 1, wherein the first arrangement of magnets (6) comprises hard magnets, semi-hard magnets, soft magnets, or a combination thereof.

3. The stack-type electrolyzer according to any of the preceding claims, wherein at least one cell (3) is provided with a diaphragm (12), a proton exchange membrane, or an anion exchange membrane.

4. The stack-type electrolyzer according to claim 3, wherein at least one of the first and second catalysts is directly coated on the diaphragm (12), on the proton exchange membrane, on the anion exchange membrane, and/or on at least one porous transport layer (7, 8).

5. The stack-type electrolyzer according to claim 3, where at least one of the first and second catalysts is coated on an independent additional electrically conductive porous layer, said independent layer being disposed between the porous transport layer (7, 8) and the diaphragm (12), the proton exchange membrane, or the anion exchange membrane.

6. The stack-type electrolyzer according to claim 4, wherein at least one of the first and second catalysts is magnetically hard, or semi-hard, or soft, or magnetizable with a magnetic susceptibility greater than 1.

7. The stack-type electrolyzer according to any of the preceding claims, wherein the magnets (6) of the first arrangement attached to the current collector anode plate (5a) and/or to the current collector cathode plate (5b), are disposed creating a path for fluid flow.

8. The stack-type electrolyzer according to any of the preceding claims, wherein the magnets (6) of the first arrangement are applied in form of powder to, or are an integral part of, the current collector anode plate (5a) and/or the current collector cathode plate (5b).

9. The stack-type electrolyzer according to any of the preceding claims, wherein the first arrangement of magnets (6) consists exclusively of semi-hard magnets and/or soft magnets, the electrolyzer also comprising a second arrangement of hard magnets which are disposed externally to the lateral closure caps (2).

10. The stack-type electrolyzer according to claims 1 or 9, wherein the first arrangement of magnets (6) and/or the second arrangement of magnets comprise at least one NdFeB coated neodymium magnet, a SmCos or Sm₂CO₁₇ samarium cobalt magnet, a FeCrCo magnet, a FeCoVCr magnet, an AINiCo magnet, or a rare earth cobalt magnet comprising Re-Co, PtCo, MnAIC, CuNiFe, hard or soft ferrites, Cr- Co steels, Carbon steels, FeNiAlTi, CoFeNi, FeCoCr, FeCoV, FeMnNiTi, Fe and FeSi(3wt%), FeCo, FeNi or FeSiAl.

11. The stack-type electrolyzer according to any of the preceding claims, wherein the material of at least one current collector anode plate (5a), one current collector cathode plate (5b) and/or one porous transport layer (7, 8) comprises soft and/or semi-hard magnet(s) with a core made of Ni, Fe, Co, Cr, Sm or alloys thereof.

12. The stack-type electrolyzer according to any of the preceding claims, wherein the material of the lateral closure caps (2) comprises a magnetic or highly magnetizable alloy, that is stable in the working environment.

13. The stack-type electrolyzer according to any of the preceding claims, wherein at least one current collector anode plate (5a), one current collector cathode plate (5b) and/or one porous transport layer (7, 8) comprises one or more sealing joints made of a polymer material that adapts to the irregularities of each surface they are in contact with.

14. The stack-type electrolyzer according to any of the preceding claims, wherein the current collector anode plates (5a), the current collector cathode plates (5b) and the porous transport layers (7, 8) of the cells, as well as both two lateral closure caps (2) comprise corresponding aligned holes for their secure fastening using threaded fasteners (17).
